(19) Europäisches Patentamt
European Patent Office
Office européen des brevets

(11) **EP 3 995 747 B1**

(12) **EUROPEAN PATENT SPECIFICATION**

(45) Date of publication and mention of the grant of the patent:
**30.10.2024 Bulletin 2024/44**

(21) Application number: **21179700.6**

(22) Date of filing: **16.06.2021**

(51) International Patent Classification (IPC):
**F24D 19/10** *(2006.01)* **F24H 9/20** *(2022.01)*

(52) Cooperative Patent Classification (CPC):
**F24H 9/2007; F24D 19/1063;** F24H 9/2021

(54) **METHOD FOR SETTING TEMPERATURE OF WATER HEATER, WATER HEATER AND NON-TRANSITORYCOMPUTER READABLE STORAGE MEDIUM**

VERFAHREN ZUR EINSTELLUNG DER TEMPERATUR EINES WASSERERHITZERS, WASSERERHITZER UND NICHT-TRANSITORISCHES COMPUTERLESBARES SPEICHERMEDIUM

PROCÉDÉ DE RÉGLAGE DE LA TEMPÉRATURE D'UN CHAUFFE-EAU, CHAUFFE-EAU ET SUPPORT D'INFORMATIONS LISIBLE PAR ORDINATEUR NON TRANSITOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2020 CN 202011226102**

(43) Date of publication of application:
**11.05.2022 Bulletin 2022/19**

(73) Proprietors:
• **Midea Group Co., Ltd.**
**Foshan, Guangdong 528311 (CN)**
• **Midea Smart Technology Co.,Ltd.**
**Foshan City, Guangdong Province (CN)**

(72) Inventors:
• **DAI, Wei**
**Foshan City (CN)**

• **JIAN, Ao**
**Foshan City (CN)**
• **CHEN, Xinle**
**Foshan City (CN)**
• **MA, Qun**
**Foshan City (CN)**

(74) Representative: **Haseltine Lake Kempner LLP**
**Cheapside House**
**138 Cheapside**
**London EC2V 6BJ (GB)**

(56) References cited:
**EP-A2- 3 101 366        WO-A1-2012/105642**
**CN-A- 110 567 163        CN-A- 112 446 169**
**US-A1- 2011 270 452**

**Description**

**TECHNICAL FIELD**

The present invention relates to the technical field of water heaters, and in particular to a method for setting temperature for a water heater, a water heater and a non-transitory computer readable storage medium.

**BACKGROUND**

In the process of using water heaters, most users tend to set the temperature of water heaters at a fixed higher lever and run the water heaters for 24 hours per day. However, it usually takes a short period of time for them to use water heaters, and the water heaters are left unused in the majority of time per day, which results in a waste of energy.
There are also some traditional ways of predicting recommended temperature of the water heaters based on historical water consumption of the users to predict future water consumption. However, since the water temperature when using fluctuates, there is inevitably a certain error in the prediction of the historical water consumption. Therefore, the predicting the future water consumption based on the historical water consumption may lead to an amplification of this error, which easily exerts negative influence on the effectiveness of the model. Furthermore, the above amplified error will give rise to a large error in the recommended temperature for the water heaters when users use the water heaters.
WO 2012/105642 A1 describes a home controller which estimate the amount of power generated by sunlight during a specific period, and estimates the amount of power consumed by an electrical device during the specific period on the basis of the history of the amount of power consumed by the electrical device.
EP 3 101 366 A2 describes a method for estimating a physical magnitude of water tank of a water heater.
CN 112 446 169 A describes a prediction method for water consumption of a water heater, the water heater and a storage medium.
US 2011/270452 A1 describes representative embodiments of methods, apparatus, and systems for controlling and scheduling power distribution in a power network, such as household power network. Document CN 110567163 B describes a method for setting the temperature for a water heater according to the preamble of claim 1.

**SUMMARY**

The present invention provides a method for setting temperature for a water heater, a water heater and a non-transitory computer readable storage medium, which aim to solve the technical problems existing in the current technology, i.e., a large error for setting the temperature for the water heater and the low accuracy of setting the temperature for the water heater.
To solve the aforementioned technical problems, a technical solution adopted by the present invention is to provide a method for setting temperature for a water heater according to claim 1. The method includes: acquiring historical power consumption characteristics of the water heater; inputting the historical power consumption characteristics of the water heater to a power-consumption prediction model being preset, and acquiring predicted power consumption of water of a user output by the power-consumption prediction model; determining predicted total power consumption of the water heater based on the predicted power consumption; determining setting temperature of the water heater based on the predicted total power consumption; and setting heating temperature of the water heater based on the setting temperature.
To solve the aforementioned technical problems, another technical solution adopted by the present invention is to provide a water heater according to claim 14.
To solve the aforementioned technical problems, further another technical solution adopted by the present invention is to provide a non-transitory computer readable storage medium storing one or more computer programs including instructions configured to be executed by a processor to perform operations of the method as described above.
The benefits of the present invention are that: compared with existing technologies, in the method for setting temperature for a water heater provided by embodiments of the present invention, the historical power consumption characteristics of the water heater are input to a preset power-consumption prediction model, and predicted power consumption of water of the user output by the power-consumption prediction model is acquired. After that, predicted total power consumption of the water heater is determined based on the predicted power consumption, and setting temperature of the water heater is determined based on the predicted total power consumption. That is, in the method for setting temperature of the water heater provided by embodiments of the present disclosure, the setting temperature of the water heater is determined based on the predicted total power consumption of the water heater in the future, so that errors associated with the traditional method of determining the set temperature based on water consumption may be reduced, energy may be saved, and the amount of water which is able to be provided by the water heater with the acquired setting temperature is closer to the actual amount of water consumed by the user.

## BRIEF DESCRIPTION OF THE DRAWINGS

In order to make the technical solution described in the embodiments of the present invention clearer, the drawings used for the description of the embodiments will be briefly described. Apparently, the drawings described below are only for illustration but not for limitation, the scope of the invention being defined by the appended claims.

FIG. 1 is a schematic flowchart of a method for setting temperature for a water heater according to an embodiment of the present invention.

FIG. 2 is a schematic flowchart of the operation at block S10 shown in FIG. 1 according to an embodiment of the present invention.

FIG. 3 is a schematic flowchart of the operation at block S11 shown in FIG. 2 according to an embodiment of the present invention.

FIG. 4 is a schematic flowchart of the operation at block S20 shown in FIG. 1 according to an embodiment of the present invention.

FIG. 5 is a schematic flowchart of the operation at block S30 shown in FIG. 1 according to an embodiment of the present invention.

FIG. 6 is a schematic flowchart of the operation at block S40 shown in FIG. 1 according to an embodiment of the present invention

FIG. 7 is a schematic structural view of a water heater according to an embodiment of the present invention

FIG. 8 is a schematic structural view of a computer readable storage according to an embodiment of the present invention.

## DETAILED DESCRIPTION

The following is a clear and complete description of the technical solutions in the embodiments of the present invention with reference to the drawings and the embodiments. The scope of the invention is defined in the appended claims.

References herein to terms of "embodiment" mean that a particular feature, structure, or characteristic described in conjunction with an embodiment may be included in at least one embodiment of the present invention. The presence of the phrase at various points in the specification does not necessarily mean a same embodiment, nor is it a separate or alternative embodiment that is mutually exclusive with other embodiments. It is understood, both explicitly and implicitly, by those skilled in the art that the embodiments described herein may be combined with other embodiments, the scope of the invention being defined in the appended claims.

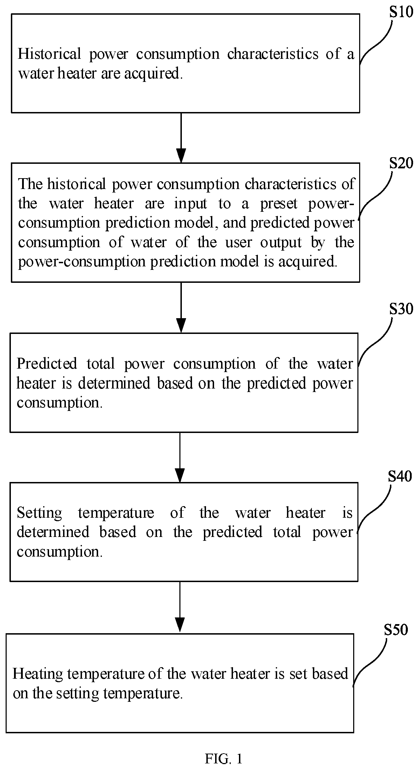

Referring to FIG. 1, FIG. 1 is a schematic flowchart of a method for setting temperature for a water heater according to an embodiment of the present invention. The method may include actions or operations at blocks illustrated in FIG. 1.

At block S10: historical power consumption characteristics of a water heater are acquired.

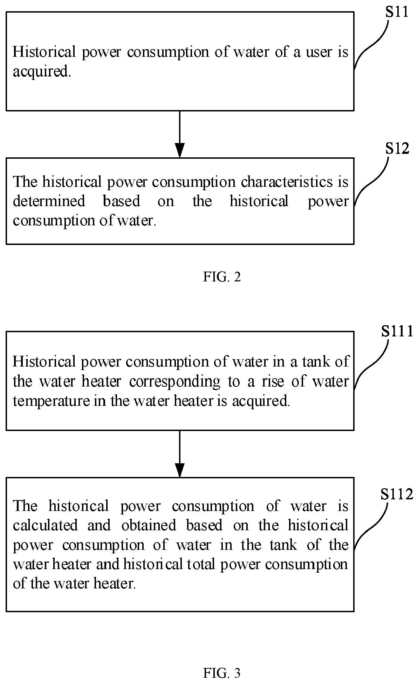

Alternatively, referring to FIG. 2, FIG. 2 is a schematic flowchart of the operation at block S10 shown in FIG. 1 according to an embodiment of the present invention. The operation at block S10 may include the following operations.

At block S11: historical power consumption of heating of water of a user is acquired.

In this operation, in which exact period the historical power consumption of heating of water is acquired may be set flexibly on the basis of actual water consumption. Given that users tend to use the electric water heaters periodically and customarily to some extent, therefore in which exact period the historical power consumption of heating of water is acquired may be determined based on usage cycle or usage habits of the user. For example, the historical power consumption of heating of water which is near a scheduled day in one or more periods may be acquired. In addition, users tend to have different demands of water in different time of a day based on big data of individual users' water use. For example, the amount of water used by the majority of the users between 7pm and 9pm of a day is much higher than that of the other period of time of the same day. Therefore, the historical power consumption of heating of water in different period of time of a day may be acquired based on the water usage habits of the user.

In this embodiment, the power consumption of the actual water use of the user is closely related to the setting temperature of the water heater, so that the water consumption supplied at the setting temperature of the water heater is closer to the actual water consumption of the user, and the error is reduced. Thus, it can be understood that the historical power consumption of water of the user refers to the actual historical power consumption of water of the user, which is different from historical total power consumption of the water heater. In some embodiments, referring to FIG. 3, FIG. 3 is a schematic flowchart of the operation at block S11 shown in FIG. 2 according to an embodiment of the present disclosure. The operation at block S11 may include the following operations at blocks S111-S112.

At block S111: historical power consumption of heating of water in a tank of the water heater corresponding to a rise of water temperature in the water heater is acquired.

In a specific implementation, the historical power consumption of heating of water in the tank of the water heater corresponding to the rise of water temperature in the water heater may be determined based on initial intra-liner temperature and final intra-liner temperature of the water heater. Specifically, the following equation may be applied to acquire the historical power consumption $W_1$ of water in the tank of the water heater corresponding to the rise of water temperature in the water heater,

$$W_1 = 7 \times V \times \frac{T_{final} - T_{initial}}{6000},$$

where $T_{final}$ refers to final intra-liner temperature of the water heater, $T_{initial}$ refers to initial intra-liner temperature of the water heater, and V refers to a volume of the water heater.

Understandably, both the initial and the final intra-liner temperature of the water heater refer to temperatures of water in the liner of the water heater, which may be acquired through a temperature sensor arranged in the liner of the water heater.

At block S112: the historical power consumption of heating of water is calculated and obtained based on the historical power consumption of water in the tank of the water heater and historical total power consumption of the water heater.

In some embodiments, the historical total power consumption may be determined based on power of at least one heat pipe of the water heater and heating duration.

Specifically, as different water heaters may have different numbers of the heat pipes, and the number of heat pipes of the water heater may be 1, 2, or 3. Thus, in the embodiments, the historical total power consumption of the water heater shall be calculated and obtained in multiple cases based on the different numbers of heat pipes.

In a case that the number of the at least one heat pipe of the water heater is 1, the historical total power consumption of the water heater may be configured as a value obtained by multiplying the power of the one heat pipe of the water heater and the heating duration.

In a case that the number of the at least one heat pipe of the water heater is 2, a value 1 is first calculated and obtained by multiplying the power of a top heat pipe and the heating duration at the top.

Then a value 2 is calculated and obtained by multiplying the power of a bottom heat pipe and the heating duration at the bottom.

The historical total power consumption of the water heater is acquired by summing up the above-mentioned value 1 and value 2.

In a case that the number of the at least one heat pipe of the water heater is 3, firstly, a value 1 is firstly calculated and obtained by multiplying the power of a top heat pipe and the heating duration at the top.

Then a value 2 is calculated and obtained by multiplying the power of a bottom heat pipe and the heating duration at the bottom.

Then a value 3 is calculated and obtained by multiplying the power of a bottom heat pipe and the heating duration at a middle part.

The historical total power consumption of the water heater is acquired by summing up the above-mentioned value 1, value 2, and value 3.

Understandably, a part of the historical total power consumption of the water heater is configured to heat the water in the liner of the water heater, that is, this part of the historical total power consumption corresponds to the historical power consumption of water in the tank of the water heater corresponding to the rise of water temperature in the water heater. While the other part is configured to heat the historical water use of the user, that is, this part of the historical total power consumption corresponds to the historical power consumption of water. Therefore, a following equation may be applied to calculate the historical power consumption of water, which is denoted by $W_2$,

$$W_2 = K \times W - W_1,$$

where W refers to the historical total power consumption of the water heater, K refers to a loss coefficient, and $W_1$ refers to the historical power consumption of water in the tank of the water heater corresponding to the rise of water temperature in the water heater.

At block S 12: the historical power consumption characteristics is determined based on the historical power consumption of water.

The historical power consumption characteristics may be statistical characteristics of multiple historical power consumptions of water of the user, e.g., a maximum value, a minimum value, an average value, a standard deviation, etc. of the multiple historical power consumptions of water of the user.

In some embodiments, the obtained historical power consumption characteristics of the user is shown in the following table. In this table, supposing that the date for determining the setting temperature of the water heater is T, then the date X days before is denoted as T-X, and the power consumption on the date T-X is denoted as Wx.

| Historical Power Consumption Characteristics | Method for formulating characteristics | Note |
|---|---|---|
| Feature 1 | (W2+W3+W4)/3 | Average power consumption of the power consumptions from the 4th day before to the 2nd day before |
| Feature 2 | max (W2, W3, W4) | A maximum power consumption of the power consumptions from the 4th day before to the 2nd day before |
| Feature 3 | min (W2, W3, W4) | A minimum power consumption of the power consumptions from the 4th day before to the 2nd day before |
| Feature 4 | std (W2, W3, W4) | A standard deviation of the power consumption from the 4th day before to the 2nd day before |
| Feature 5 | (W7+W14+W21)/3 | An average power consumption of the power consumptions on the 7th day before, the 14th day before and the 21st day before |
| Feature 6 | max (W7, W14, W21) | A maximum power consumption of the power consumptions on the 7th day before, the 14th day before and the 21st day before |
| Feature 7 | min (W7, W14, W21) | A minimum power consumption of the power consumptions on the 7th day before, the 14th day before and the 21st day before |
| Feature 8 | std (W7, W14, W21) | A standard deviation of the power consumption on the 7th day before, the 14th day before and the 21st day before |

At block S20: the historical power consumption characteristics of the water heater are input to a preset power-consumption prediction model, and predicted power consumption of water of the user output by the power-consumption prediction model is acquired.

Specifically, the power-consumption prediction model is acquired by training based on machine learning algorithms, wherein historical power consumption characteristics of the water heater corresponding to training water events are configured as input data, and predicted historical power consumption of water of the user corresponding to the training water events are configured as output data.

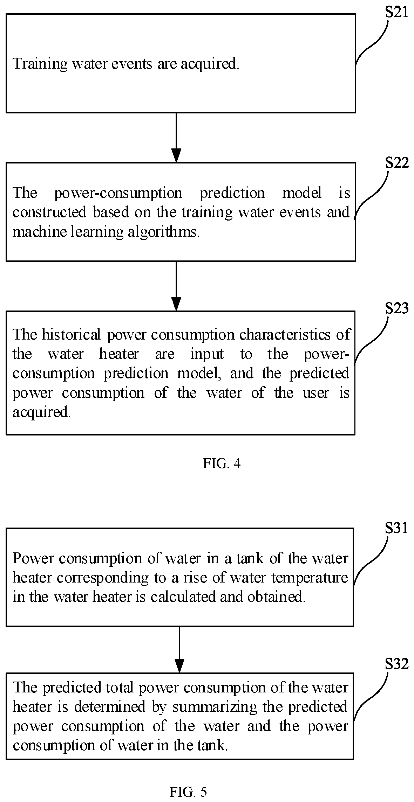

Referring to FIG. 4, FIG. 4 is a schematic flowchart of the operation at block S20 shown in FIG. 1 according to an embodiment of the present disclosure. The operation at block S20 may include the following operations at blocks S21-523.

At block S21: training water events are acquired.

A preset number of the training water events are required to be constructed before the power-consumption prediction model is established (For example, 1.5 million training water events are constructed in advance). Each of the training water events may include the historical power consumption characteristics corresponding to the training water event, which are acquired with the same method of acquiring the historical power consumption characteristics of the user at block S10 or with other methods without any limit. In addition, every training water event should correspond to a defined actual power consumption of the user.

At block S22: the power-consumption prediction model is constructed based on the training water events and machine learning algorithms.

The historical power consumption characteristic corresponding to each training water event is configured as sample input data in advance, the predicted power consumption of water of the user corresponding to the each training water event is configured as sample output data, and training is performed based on machine learning algorithms. In this way, the power-consumption prediction model may be acquired.

In some embodiments, in a case that the power-consumption prediction model is established based on linear regression equation, the power-consumption prediction model may be represented as:

$$\hat{y}_i = \sum_{i=1}^{m} a_i X_i ,$$

where $X_i$ refers to an $i$th historical power consumption characteristic, $\hat{y}_i$ refers to an $i$th predicted power consumption of water output by the power-consumption prediction model, $a_i$ refers to a $i$th coefficient of the linear regression equation, and $m$ refers to the fact that there are $m$ coefficients in the linear regression equation.

Conventionally, forecast error of the user experience has not taken into account when the power consumption of the water of the user is predicted. In other words, the phenomenon has not been considered that the user experience is worse when the predicted power consumption of the water is less than the actual power consumption of the water of the user.

Therefore, in the method for setting the temperature of the water heater provided by the embodiments, when the power-consumption prediction model is established, the forecast error, as an important reference on the discrepancies of user experience, has been taken into account.

In other words, during the training process of the power-consumption prediction model, a difference between the actual water consumption of the user minus the predicted water consumption of the user is taken as an important parameter of the loss function of the power-consumption prediction model. In this way, on the basis of predicting the predicted power consumption of the water of the user as close as possible to the actual power consumption of the water of the user, the predicted power consumption of the water of the user may be greater than the actual power consumption of the water of the user as far as possible, which improves the user experience by limiting the occurrence of embarrassing scene that there is no hot water when the user needs..

In some embodiments, during the training process of the power-consumption prediction model, the loss function of the power-consumption prediction model may include a first regularization term and a second regularization term. The first regularization term is a sum of absolute values of coefficients of the linear regression equation, i.e. $\sum_{j=1}^{m} |a_j|$ , the second regularization term is a sum of squares of the coefficients of the linear regression equation, i.e. $\sum_{j=1}^{m} a_j^2$ .

Specifically, the loss function may be established as follows,

$$E = \sum_{i=1}^{n} \{ \frac{(1-\lambda)(y_i - \hat{y}_i)^2 + \lambda(y_i - \hat{y}_i)}{|y_i - \hat{y}_i|} + \alpha \sum_{j=1}^{m} |a_j| + \beta \sum_{j=1}^{m} a_j^2 \} ,$$

where $y_i$ refers to actual power consumption of the water of the user corresponding to an $i$th training water event, $\hat{y}_i$ refers to an $i$th predicted power consumption of the water of the user output by the power-consumption prediction model, $\alpha$, $\beta$ and $\lambda$ refer to hyper-parameters, where $\alpha, \beta, \lambda > 0$ and $\lambda \in (0,1)$, $n$ refers to a total number of training water events, $a_j$ refers to a $j$th coefficient of the linear regression equation, and $m$ refers to the fact that there are $m$ coefficients in the linear regression equation.

$$U = \frac{\lambda(y_i - \hat{y}_i)}{|y_i - \hat{y}_i|}$$

In the above-mentioned loss function, $U = \frac{\lambda(y_i - \hat{y}_i)}{|y_i - \hat{y}_i|}$ shows that the forecast error for the difference in user experience has been taken into account as an important parameter when the power-consumption prediction model is established. Obviously, when the power consumption of the water output by the power-consumption prediction model is greater than the actual power consumption of the water of the user, the less the $U$ is, the less the value of the loss function will also be; and the greater the $U$ is, the greater the value of the loss function will also be. $\lambda$ is a hyper-parameter, where λ > 0 and λ ∈ (0,1). During the process of model training, the value of λ can be adjusted, so that the weight of the first term and the second term in the loss function may be adjusted. In other words, in the loss function, it shall be determined whether the user hopes that the power consumption of the water output by the power-consumption prediction model is greater than the actual power consumption of the water of the user (that is, the possibility that the power consumption of the water output by the power-consumption prediction model is close to the actual power consumption of the water of the user is reduced), or the user hopes that the power consumption of the water output by the power-consumption prediction model is close to the actual power consumption of the water of the user (that is, the possibility that the power consumption of the water output by the power-consumption prediction model is less than the actual power consumption of the water of the user is increased). For instance, the user may expect that the amount of heated water provided by the water heater at the preset temperature is slightly greater than the actual water need of the user in winter. In this situation, the value of λ may be increased, which correspondingly increases the value of the *U*, which leads to the power consumption of the water output by the power-consumption prediction model is slightly greater than the actual power consumption of the water of the user.

During the processing of training, the closer the value of the loss function *E* is to 0, the more accurate the trained power-consumption prediction model is. The less the value of the loss function *E* is, the greater the power consumption of the water output by the power-consumption prediction model is than the actual power consumption of the water of the user. In this way, the occurrence of embarrassing scene that there is no hot water when the user needs is limited, thereby improving the user experience.

At block S23: the historical power consumption characteristics of the water heater are input to the power-consumption prediction model, and the predicted power consumption of the water of the user is acquired.

In another embodiment, considering that the behavior of consuming water by the user is not only strongly periodic, but is also affected by the weather and holidays, temperature and holiday data may be configured as one or more features for combining the historical power consumption characteristics of the user to train the power-consumption prediction model when it is established.

Understandably, the temperature data refer to that in an area where the water heater is situated. Multiple temperature data may be acquired. For example, highest and lowest temperatures of a day in the area where the water heater is situated, an average temperature of a day in the area where the water heater is situated, a difference of the highest temperature of a day in the area where the water heater is situated subtracting the lowest temperature of a day in the area where the water heater is situated, etc., may be acquired, which is not limited herein. In some embodiments, multiple methods may be acquired by various methods, including: acquiring the temperature data through weather apps in mobile terminals or weather forecasts on TV

For example, the acquired temperature data are shown in the following table.

| Name of Featu | Description |
|---|---|
| Feature 1 | The lowest temperature of a day |
| Feature 2 | The highest temperature of a day |
| Feature 3 | The average temperature of a day |
| Feature 4 | The fluctuation range of temperatures of a day (acquired by subtracting the lowest temperature of the day from the highest temperature of the day) |
| Feature 5 | A result acquired by subtracting the average temperature of the previous day from that of the current day |
| Feature 6 | A result acquired by subtracting the lowest temperature of the previous day from that of the current day |
| Feature 7 | A result acquired by subtracting the highest temperature of the previous day from that of the current day |
| Feature 8 | A result acquired by subtracting the fluctuation range of temperatures of the previous day from that of the current day |

Understandably, in the process of training the power-consumption prediction model, the holiday indicates whether the day corresponding to the actual power consumption of the water of the user belongs to a particular holiday For example, when the day corresponding to the actual power consumption of the water of the user is a holiday, the holiday data of the actual power consumption of the water of the user corresponding to the training water event may be assigned to a value of 1. Correspondingly, when the day corresponding to the actual power consumption of the water of the user is not a holiday, the holiday data of the actual power consumption of the water of the user corresponding to the training water event may be assigned to a value of 0.

Specifically, in the process of training the power-consumption prediction model, the historical power consumption characteristics of the user, the temperature data and the holiday data are configured as the sample input data, predicted power consumption of the water of the user corresponding to the training water evens are configured as the sample output data, and training is performed based on the machine learning algorithms. In this process, the difference between the actual water consumption of the user minus the predicted water consumption of the user is taken as an important parameter of the loss function of the power-consumption prediction model.

Specifically, in a case that the power-consumption prediction model is established based on the linear regression equation, the power-consumption prediction model may be represented as:

$$\hat{y}_i = \sum_{i=1}^{x} a_i X_i + \sum_{j=1}^{z} b_i Z_j + cC$$

,

where $X_i$ ($i=1 \ldots m$) refers to an $i^{th}$ historical power consumption characteristic, and $a_i$ ($i=1, \ldots x$) refers to a parameter to be measured corresponding to the $i^{th}$ historical power consumption characteristic. $Z_j$ refers to a $j^{th}$ temperature data, and $b_j$ refers to a parameter to be measured corresponding to the $j^{th}$ temperature data. C refers to the holiday data, and $c$ refers to a parameter to be measured corresponding to the holiday data.

By the same token, the loss function may be established as follows,

$$E = \sum_{i=1}^{n} \left\{ \frac{(1-\lambda)(y_i - \hat{y}_i)^2 + \lambda(y_i - \hat{y}_i)}{\left| y_i - \hat{y}_i \right|} + \alpha(\sum_{j=1}^{m} \left| a_j \right| + \sum_{k=1}^{z} \left| b_k \right| + \left| c \right|) + \beta(\sum_{j=1}^{m} a_j^2 + \sum_{k=1}^{z} b_k^2 + c^2) \right\}$$

where, $y_i$ refers to the actual power consumption of the water of the user corresponding to an $i^{th}$ training water event, $\hat{y}_i$ refers to an $i^{th}$ predicted power consumption of the water of the user output by the power-consumption prediction model, $\alpha$, $\beta$ and $\lambda$ refer to hyper-parameters, where $\alpha$, $\beta$, $\lambda>0$ and $\lambda \in (0,1)$, $n$ refers to a total number of training water events, $a_j$ refers to a coefficient to be measured corresponding to a $j^{th}$ training water event, $b_k$ refers to a coefficient to be measured corresponding to $k^{th}$ temperature data, $c$ refers to a coefficient to be measured corresponding to holiday data, $m$ refers to the fact that there are $m$ historical power consumption characteristics in the linear regression equation, and $z$ refers to the fact that there are $z$ temperature data in the linear regression equation.

Meanwhile, after the training of the power-consumption prediction model is finished, the historical power consumption characteristics of the water heater, the temperature data and the holiday data are input to the power-consumption prediction model, and the predicted power consumption of the water of the user output by the power-consumption prediction model is thus acquired.

At block S30: predicted total power consumption of the water heater is determined based on the predicted power consumption.

Understandably, after the predicted power consumption of the water of the user has been determined at block S20, the predicted total power consumption of the water heater is required to be determined based on the predicted power consumption, the setting temperature of the water heater may be then determined based on the predicted total power consumption. In some embodiments, referring to FIG. 5, FIG. 5 is a schematic flowchart of the operation at block S30 shown in FIG. 1 according to an embodiment of the present disclosure. The operation at block S30 may include the following operations at blocks S31-532.

At block S31: power consumption of water in a tank of the water heater corresponding to a rise of water temperature in the water heater is calculated and obtained.

Specifically, the following equation may be applied to acquire the power consumption $W_1$ of water in the tank of the water heater corresponding to the rise of water temperature in the water heater,

$$W_1 = 7 \times V \times \frac{T_{out} - T_{initial}}{6000}$$

,

where $T_{out}$ refers to outlet water temperature of the water heater, $T_{initial}$ refers to initial intra-liner temperature of the water heater, and V refers to a volume of the water heater.

The outlet water temperature may refer to the temperature associated with the user who feels comfortable in using water, e.g., 42 °C. The power consumption $W_1$ of water in the tank of the water heater corresponding to the rise of water temperature in the water heater refers to the power consumed to heat the water in the water heater to the temperature as high as the outlet water temperature.

The initial intra-liner temperature of the water heater is the actual temperature indicated by first uploading data of the water heater. As it usually takes a period of time from the model calculation to the pushing the setting temperature to the device side, therefore, in an actual application, the actual temperature of the water heater of the first uploading data may be approximated to the water temperature of the most recent uploading data when the prediction model is working.

At block S32: the predicted total power consumption of the water heater is determined by summarizing the predicted power consumption of the water and the power consumption of water in the tank.

Considering that the value of the predicted total power consumption can only be equal to or greater than 0, therefore the minimum value of the predicted total power consumption may be limited as follows:

Predicted total power consumption=max(predicted total power consumption, 0)

At block S40: setting temperature of the water heater is determined based on the predicted total power consumption.

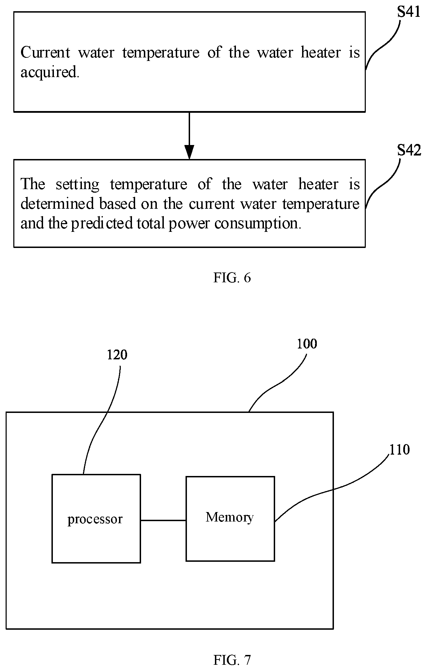

In some embodiments, referring to FIG. 6, FIG. 6 is a schematic flowchart of the operation at block S40 shown in FIG. 1 according to an embodiment of the present disclosure. The operation at block S40 may include the following operations at blocks S41-542.

At block S41: current water temperature of the water heater is acquired. The current water temperature in the water heater may be acquired from the temperature sensor arranged at a corresponding position inside the water heater, which will not be illustrated here.

At block S42: the setting temperature of the water heater is determined based on the current water temperature and the predicted total power consumption.

Specifically, the setting temperature of the water heater may be determined with the following equation,

$$T = \frac{3600y}{4.2V} + T_{curr}$$

where $T$ refers to the determined setting temperature of the water heater, $y$ refers to the predicted total power consumption, $T_{curr}$ refers to the current water temperature, and $V$ refers to a volume of the water heater.

At block S50: heating temperature of the water heater is set based on the setting temperature.

In some embodiments, before the operation at block S50, in order to prevent the case that there are some abnormal and extreme values in the acquired setting temperature of the water heater, the acquired setting temperature of the water heater may be limited by an upper limit and a lower limit, so that the result derived from the prediction model is in accordance with the reality.

Specifically, in general, maximum temperature that is permitted to set in the water heater is configured for the sake of the user's safety. Therefore, an extremum correction may be set based on the maximum temperature allowable to be set on the water heater. Specifically, the extremum correction may be performed on the setting temperature of the water heater with the following equation,

$$T_{final} = \max(T_{out}, \min(T, T_{max})),$$

where $T_{max}$ refers to the maximum temperature which is permitted to set for the water heater, $T_{out}$ refers to the outlet water temperature, $T$ refers to the setting temperature of the water heater, and $T_{final}$ refers to the setting temperature of the water heater after extremum correction.

The maximum temperatures that are permitted to set vary in different types and brands of water heaters. For example, the maximum temperature that is permitted to set for a storage-type electric water heater is about 75 °C, while the maximum temperature for an instant electric water heater is about 80°C, and the maximum temperature for an air-powered water heater (without the auxiliary function of electric heating) is about 60 °C, each of which is lower than that for a gas water heater.

In the method for setting temperature for a water heater provided by embodiments of the present disclosure, the historical power consumption characteristics of the water heater are input to a preset power-consumption prediction model, and predicted power consumption of water of the user output by the power-consumption prediction model is acquired. After that, predicted total power consumption of the water heater is determined based on the predicted power consumption, and setting temperature of the water heater is determined based on the predicted total power consumption. That is, in the method for setting temperature of the water heater provided by embodiments of the present disclosure, the setting temperature of the water heater is determined based on the predicted total power consumption of the water heater in the future, so that errors associated with the traditional method of determining the set temperature based on water consumption may be reduced, energy may be saved, and the amount of water which is able to be provided by the water heater with the acquired setting temperature is closer to the actual amount of water consumed by the user.

Referring to FIG. 7, FIG. 7 is a schematic structural view of a water heater according to an embodiment of the present disclosure. The water heater 100 may include a memory 110 and a processor 120. The memory 110 is configured to store computer programs, and the processor 120 is configured to run the computer programs to realize the operations of the method for setting temperature of the water heater 100. For example, the water heater 100 is configured to: acquire historical power consumption characteristics of the water heater 100; input the historical power consumption characteristics of the water heater 100 to a preset power-consumption prediction model, and acquire predicted power consumption of water of the user output by the power-consumption prediction model; determine predicted total power consumption of the water heater 100 based on the predicted power consumption; determine setting temperature of the water heater 100 based on the predicted total power consumption; and set heating temperature of the water heater based on the setting temperature. The processor 120 may be a central processing unit (CPU), or an application specific integrated circuit (ASIC), or one or more integrated circuits to realize the embodiments in the present disclosure.

The memory 110 is configured to store executable instructions. The memory 110 may include a highspeed random access memory (RAM) 110, and may also include a non-volatile memory 110, for example, at least a magnetic disk storage. In addition, the memory 110 may also be a series of memories. The memory 110 may be chunked, and the chunks may be combined into virtual volumes according to certain rules. The instructions stored in the memory 110 can be executed by the processor 120, in order for the processor 120 to realize the method for setting temperature of the water heater 100 in any of the aforementioned embodiments.

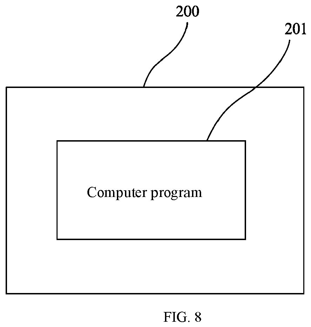

Referring to FIG. 8, FIG. 8 is a schematic structural view of a computer readable storage according to an embodiment of the present disclosure. A computer readable storage medium 200 stores one or more computer program 201, which can be executed by the processor 100 to realize the operations of the method for setting temperature of the water heater 100. For example, the computer program 201 can be executed by the processor 100 to realize the following operations: acquiring historical power consumption characteristics of the water heater 100; inputting the historical power consumption characteristics of the water heater 100 to a preset power-consumption prediction model, and acquiring predicted power consumption of water of the user output by the power-consumption prediction model; determining predicted total power consumption of the water heater 100 based on the predicted power consumption; determining setting temperature of the water heater 100 based on the predicted total power consumption; and setting heating temperature of the water heater based on the setting temperature. The computer readable storage medium 200 may be any usable media or data storage devices which can be stored in the computer, including but not limited to a magnetic memory (e.g., floppy disks, hard disks, tapes, magnetic optical disks (MO), etc.), an optical memory (e.g., CD, DVD, BD, HVD, etc.), and a semiconductor memory (e.g., read-only memory (ROM), erasable programmable read-only memory (EPROM), electrically erasable programmable read-only memory (EEPROM), the non-volatile memory 110 (NANDFLASH), solid state disk (SSD)), etc.

In the method for setting temperature for a water heater provided by embodiments of the present invention, the historical power consumption characteristics of the water heater are input to a preset power-consumption prediction model, and predicted power consumption of water of the user output by the power-consumption prediction model is acquired. After that, predicted total power consumption of the water heater is determined based on the predicted power consumption, and setting temperature of the water heater is determined based on the predicted total power consumption. That is, in the method for setting temperature of the water heater provided by embodiments of the present invention, the setting temperature of the water heater is determined based on the predicted total power consumption of the water heater in the future, so that errors associated with the traditional method of determining the set temperature based on water consumption may be reduced, energy may be saved, and the amount of water which is able to be provided by the water heater with the acquired setting temperature is closer to the actual amount of water consumed by the user.

The terms "first", "second" are applied to distinguish different objects, rather than to describe specific orders. In addition, apparently, the terms "include", "have" and the like are intended to cover non-exclusive inclusion. For example, a process, methods, system, product or device including a series of units or steps of processes is not limited to the listed steps or units, but optionally also includes steps or units not listed, or optionally also includes other steps or units inherent to the process, method, product, or device.

Terms of "embodiment" and the like mean that a specific feature, structure, or characteristic described in combination may be included in at least one embodiment of the present disclosure. The appearance of the phrase at various locations in the specification does not necessarily refer to a same embodiment, nor is it independent or alternative to other embodiments that are mutually exclusive. It is understood, both explicitly and implicitly, by those skilled in the art that what is described herein may be combined with other embodiments.

It should be noted that, the foregoing disclosed is merely exemplary implementations and it is not intended to limit the scope of the present invention which is defined in the appended claims.

**Claims**

1. A method for setting temperature for a water heater (100), **characterized in that** the method comprises:

    acquiring (S10) historical power consumption characteristics of the water heater (100);
    inputting (S20) the historical power consumption characteristics of the water heater (100) to a power-consumption prediction model being preset, and acquiring (S20) predicted power consumption of heating of water of a user output by the power-consumption prediction model;
    determining (S30) predicted total power consumption of the water heater (100) based on the predicted power consumption,

    **characterized in that** the method comprises:

    determining (S40) setting temperature of the water heater (100) based on the predicted total power consumption; and
    setting (S50) heating temperature of the water heater (100) based on the setting temperature.

2. The method of claim 1, wherein the determining (S40) the setting temperature of the water heater (100) based on the predicted total power consumption comprises:

    acquiring (S41) current water temperature of the water heater (100); and
    determining (S42) the setting temperature of the water heater (100) based on the current water temperature and the predicted total power consumption.

3. The method of claim 2, wherein the determining (S42) the setting temperature of the water heater (100) based on the current water temperature and the predicted total power consumption comprises:
determining the setting temperature of the water heater (100) with a following equation,

$$ T = \frac{3600y}{4.2V} + T_{curr} $$

    where $T$ is the setting temperature of the water heater (100), $y$ is the predicted total power consumption, $T_{curr}$ is the current water temperature, and $V$ is a volume of water of the water heater (100).

4. The method of claim 1, wherein the inputting (S20) the historical power consumption characteristics of the water heater (100) to the power-consumption prediction model being preset, and the acquiring (S20) the predicted power consumption of heating of the water of the user output by the power-consumption prediction model comprise:

    acquiring temperature data and holiday data; and
    inputting the historical power consumption characteristics of the water heater (100), the temperature data and the holiday data to the power-consumption prediction model, and acquiring the predicted value of power consumption of heating of the water of the user output by the power-consumption prediction model.

5. The method of claim 1, wherein the inputting (S20) the historical power consumption characteristics of the water heater (100) to the power-consumption prediction model being preset, and the acquiring (S20) the predicted power consumption of the heating of water of the user output by the power-consumption prediction model comprise:

    acquiring (S21) training water events;
    constructing (S22) the power-consumption prediction model based on the training water events and machine learning algorithms; and
    inputting (S23) the historical power consumption characteristics of the water heater (100) to the power-consumption prediction model, and acquiring (S23) the predicted power consumption of the heating of water of the user.

6. The method of claim 5, wherein the power-consumption prediction model is established based on a linear regression equation;
during a training process of the power-consumption prediction model, a loss function of the power-consumption prediction model comprises a first regularization term and a second regularization term, the first regularization term is a sum of absolute values of coefficients of the linear regression equation, and the second regularization term is a sum of squares of the coefficients of the linear regression equation.

7. The method of claim 6, wherein the power-consumption prediction model is expressed as

$$\hat{y}_i = \sum_{i=1}^{m} a_i X_i \,,$$

wherein the loss function is

$$E = \sum_{i=1}^{n} \left\{ \frac{(1-\lambda)(y_i - \hat{y}_i)^2 + \lambda(y_i - \hat{y}_i)}{|y_i - \hat{y}_i|} + \alpha \sum_{j=1}^{m} |a_j| + \beta \sum_{j=1}^{m} a_j^2 \right\},$$

where $X_i$ is an $i^{th}$ historical power consumption characteristic, $y_i$ is actual power consumption of the heating of water of the user corresponding to an $i^{th}$ training water event, $\hat{y}_i$ is an $i^{th}$ predicted value of power consumption of the heating of water of the user output by the power-consumption prediction model, $\alpha$, $\beta$ and $\lambda$ are hyper-parameters, where $\alpha$, $\beta$, $\lambda > 0$ and $\lambda \in (0,1)$, $n$ is a total number of training water events, $a_j$ is a $j^{th}$ coefficient of the linear regression equation, and $m$ refers to a fact that there are $m$ coefficients in the linear regression equation.

8. The method of claim 1, wherein the determining (S30) the predicted total power consumption of the water heater (100) based on the predicted power consumption comprises:

calculating (S31) and obtaining (S31) power consumption of heating of water in a tank of the water heater (100) corresponding to a rise of water temperature in the water heater (100); and
determining (S32) the predicted total power consumption of the water heater (100) by summing the predicted power consumption of the water and the power consumption of the heating of water in the tank.

9. The method of claim 1, wherein the acquiring (S10) the historical power consumption characteristics of the water heater (100) comprises:

acquiring (S 11) historical power consumption of heating of water of the user; and
determining (S12) the historical power consumption characteristics based on the historical power consumption for heating water of the user.

10. The method of claim 9, wherein the acquiring (S11) the historical power consumption of water of the user comprises:

acquiring (S111) historical power consumption of heating of water in a tank of the water heater (100) corresponding to a rise of water temperature in the water heater (100); and
calculating (S112) and obtaining (S112) the historical power consumption of water based on the historical power consumption of heating of water in the tank of the water heater (100) and historical total power consumption of the water heater (100).

11. The method of claim 10, wherein the acquiring (S111) historical power consumption of heating of water in the tank of the water heater (100) corresponding to the rise of water temperature in the water heater (100) comprises:

determining the historical power consumption of heating of water in the tank of the water heater (100) corresponding to the rise of water temperature in the water heater (100) based on initial intra-liner temperature and final intra-liner temperature of the water heater (100);
wherein the historical power consumption $W_1$ of heating of water in the tank of the water heater (100) corresponding to the rise of water temperature in the water heater (100) is acquired with a following equation,

$$W_1 = 7 \times V \times \frac{T_{final} - T_{initial}}{6000},$$

where $T_{final}$ is the final intra-liner temperature of the water heater (100), $T_{initial}$ is the initial intra-liner temperature of the water heater (100), and $V$ is a volume of water of the water heater (100).

12. The method of claim 10, wherein the historical power consumption of the water, which is denoted by $W_2$, is calculated with a following equation,

$$W_2 = KW - W_1,$$

where W is the historical total power consumption of the water heater (100), K is a loss coefficient, and $W_1$ is the historical power consumption of heating of water in the tank of the water heater (100) corresponding to the rise of water temperature in the water heater (100).

13. The method of claim 1, wherein after the determining (S40) the setting temperature of the water heater (100) based on the predicted total power consumption, the method further comprises:

performing extremum correction on the setting temperature of the water heater (100);
wherein the extremum correction on the setting temperature of the water heater (100) is performed based on a following equation,

$$T_{final} = \max(T_{out}, \min(T, T_{max})),$$

where $T_{max}$ is maximum temperature which is permitted to set for the water heater (100), $T_{out}$ is outlet water temperature of the water heater (100), $T$ is the setting temperature of the water heater (100), and $T_{final}$ is the setting temperature of the water heater (100) after the extremum correction.

14. A water heater (100) comprising a tank, **characterized by** comprising a memory (110), a processor (120) and one or more computer programs stored in the memory (110) and configured to be executed by the processor (120), the one or more programs comprising instructions to be executed by the processor (120) to perform operations of the method of any one of claims 1-13.

15. A non-transitory computer readable storage medium (200), **characterized by** storing one or more computer programs (201) comprising instructions configured to be executed by a processor (120) to perform operations of the method of any one of claims 1-13.

**Patentansprüche**

1. Verfahren zum Einstellen der Temperatur für einen Wassererhitzer (100), **dadurch gekennzeichnet, dass** das Verfahren Folgendes umfasst:

Erwerben (S10) historischer Stromverbraucheigenschaften des Wassererhitzers (100);
Eingeben (S20) der historischen Stromverbraucheigenschaften des Wassererhitzers (100) in ein Stromverbrauchvorhersagemodell, das voreingestellt ist, und Erwerben (S20) des vorhergesagten Stromverbrauchs für die Erhitzung von Wasser einer Benutzerausgabe durch das Stromverbrauchvorhersagemodell;
Bestimmen (S30) des vorhergesagten Gesamtstromverbrauchs des Wassererhitzers (100) basierend auf dem vorhergesagten Stromverbrauch,
**dadurch gekennzeichnet, dass** das Verfahren Folgendes umfasst:

Bestimmen (S40) der Einstellungstemperatur des Wassererhitzers (100) basierend auf dem vorhergesagten Gesamtstromverbrauch; und
Einstellen (S50) der Heiztemperatur des Wassererhitzers (100) basierend auf der Einstelltemperatur.

2. Verfahren nach Anspruch 1, wobei das Bestimmen (S40) der Einstelltemperatur des Wassererhitzers (100) basierend auf dem vorhergesagten Gesamtstromverbrauch Folgendes umfasst:

Erwerben (S41) der aktuellen Wassertemperatur des Wassererhitzers (100); und
Bestimmen (S42) der Einstelltemperatur des Wassererhitzers (100) basierend auf der aktuellen Wassertemperatur und dem vorhergesagten Gesamtstromverbrauch.

3. Verfahren nach Anspruch 2, wobei das Bestimmen (S42) der Einstelltemperatur des Wassererhitzers (100) basierend auf der aktuellen Wassertemperatur und dem vorhergesagten Gesamtstromverbrauch Folgendes umfasst:

Bestimmen der Einstelltemperatur des Wassererhitzers (100) mit einer folgenden Gleichung,

$$T = \frac{3600y}{4,2\,V} + T_{curr}$$

wobei $T$ die Einstelltemperatur des Wassererhitzers (100) ist, $y$ der vorhergesagte Gesamtstromverbrauch ist, $T_{curr}$ die aktuelle Wassertemperatur ist und $V$ ein Wasservolumen des Wassererhitzers (100) ist.

4. Verfahren nach Anspruch 1, wobei das Eingeben (S20) der historischen Stromverbraucheigenschaften des Wassererhitzers (100) in das Stromverbrauchvorhersagemodell, das voreingestellt ist, und das Erwerben (S20) des vorhergesagten Stromverbrauchs für das Erhitzen des Wassers der Benutzerausgabe durch das Stromverbrauchvorhersagemodell Folgendes umfassen:

Erwerben von Temperaturdaten und Urlaubsdaten; und
Eingeben der historischen Stromverbraucheigenschaften des Wassererhitzers (100), der Temperaturdaten und der Urlaubsdaten in das Stromverbrauchvorhersagemodell, und Erwerben des vorhergesagten Wertes des Stromverbrauchs für die Erwärmung des Wassers der Benutzerausgabe durch das Stromverbrauchvorhersagemodell.

5. Verfahren nach Anspruch 1, wobei das Eingeben (S20) der historischen Stromverbraucheigenschaften des Wassererhitzers (100) in das Stromverbrauchvorhersagemodell, das voreingestellt ist, und das Erwerben (S20) des vorhergesagten Stromverbrauchs für das Erhitzen des Wassers der Benutzerausgabe durch das Stromverbrauchvorhersagemodell Folgendes umfassen:

Erwerben (S21) von Trainingswasserereignissen;
Konstruieren (S22) des Stromverbrauchvorhersagemodells basierend auf den Trainingswasserereignissen und maschinellen Lernalgorithmen; und
Eingeben (S23) der historischen Stromverbraucheigenschaften des Wassererhitzers (100) in das Stromverbrauchvorhersagemodell und Erwerben (S23) des vorhergesagten Stromverbrauchs für das Erhitzen von Wasser des Benutzers.

6. Verfahren nach Anspruch 5, wobei das Stromverbrauchvorhersagemodell basierend auf einer linearen Regressionsgleichung hergestellt wird;
während eines Trainingsprozesses des Stromverbrauchvorhersagemodells umfasst eine Verlustfunktion des Stromverbrauchvorhersagemodells einen ersten Regularisierungsterm und einen zweiten Regularisierungsterm, wobei der erste Regularisierungsterm eine Summe von Absolutwerten von Koeffizienten der linearen Regressionsgleichung ist und der zweite Regularisierungsterm eine Summe von Quadraten der Koeffizienten der linearen Regressionsgleichung ist.

7. Verfahren nach Anspruch 6, wobei das Stromverbrauchvorhersagemodell ausgedrückt wird als

$$\hat{y}_i = \sum_{i=1}^{m} a_i X_i \,,$$

wobei die Verlustfunktion

$$E = \sum\nolimits_{i=1}^{n} \{ \frac{(1-\lambda)(y_i - \hat{y}_i)^2 + \lambda(y_i - \hat{y}_i)}{|y_i - \hat{y}_i|} + \alpha \sum\nolimits_{j=1}^{m} |a_j| + \beta \sum\nolimits_{j=1}^{m} a_j^2 \},$$

wobei $X_i$ eine $i$-te historische Stromverbraucheigenschaft ist, $y_i$ der tatsächliche Stromverbrauch für das Erhitzen von Wasser des Benutzers ist, der einem $i$-ten Trainingswasserereignis entspricht, $\hat{y}_i$ ein $i$-ter vorhergesagter Wert des Stromverbrauchs für das Erhitzen von Wasser des Benutzers ist, der von dem Stromverbrauchvorhersagemodell ausgegeben wird, $\alpha$, $\beta$ und A Hyperparameter sind, wobei $\alpha$, $\beta$, $\lambda > 0$ und $\lambda \in (0,1)$ sind, n die Gesamtzahl der Trainingswasserereignisse ist, $a_j$ der $j$-te Koeffizient der linearen Regressionsgleichung ist und $m$ sich auf die Tatsache bezieht, dass es $m$ Koeffizienten in der linearen Regressionsgleichung gibt.

**8.** Verfahren nach Anspruch 1, wobei das Bestimmen (S30) des vorhergesagten Gesamtstromverbrauchs des Wassererhitzers (100) basierend auf dem vorhergesagten Stromverbrauch Folgendes umfasst:

Berechnen (S31) und Erlangen (S31) des Stromverbrauchs für das Erhitzen von Wasser in einem Tank des Wassererhitzers (100), der dem Anstieg der Wassertemperatur in dem Wassererhitzer (100) entspricht; und Bestimmen (S32) des vorhergesagten Gesamtstromverbrauchs des Wassererhitzers (100) durch Summieren des vorhergesagten Stromverbrauchs des Wassers und des Stromverbrauchs für das Erhitzen des Wassers in dem Tank.

**9.** Verfahren nach Anspruch 1, wobei das Erwerben (S10) der historischen Stromverbraucheigenschaften des Wassererhitzers (100) umfasst:

Erwerben (S11) des historischen Stromverbrauchs für das Erhitzen von Wasser des Benutzers; und Bestimmen (S12) der historischen Stromverbraucheigenschaften basierend auf dem historischen Stromverbrauch für das Erhitzen von Wasser des Benutzers.

**10.** Verfahren nach Anspruch 9, wobei das Erfassen (S11) des historischen Stromverbrauchs von Wasser des Benutzers Folgendes umfasst:

Erwerben (5111) des historischen Stromverbrauchs für das Erhitzen von Wasser in einem Tank des Wassererhitzers (100), der dem Anstieg der Wassertemperatur in dem Wassererhitzer (100) entspricht; und Berechnen (S112) und Erlangen (S112) des historischen Stromverbrauchs von Wasser basierend auf dem historischen Stromverbrauch für das Erhitzen von Wasser in dem Tank des Wassererhitzers (100) und dem historischen Gesamtstromverbrauch des Wassererhitzers (100).

**11.** Verfahren nach Anspruch 10, wobei das Erwerben (S111) des historischen Stromverbrauchs für das Erhitzen von Wasser in dem Tank des Wassererhitzers (100), der dem Anstieg der Wassertemperatur in dem Wassererhitzer (100) entspricht, Folgendes umfasst:

Bestimmen des historischen Stromverbrauchs für das Erhitzen von Wasser in dem Tank des Wassererhitzers (100), der dem Anstieg der Wassertemperatur in dem Wassererhitzer (100) entspricht, basierend auf der anfänglichen Intra-Liner-Temperatur und der endgültigen Intra-Liner-Temperatur des Wassererhitzers (100); wobei der historische Stromverbrauch $W_1$ der Erhitzung von Wasser in dem Tank des Wassererhitzers (100), der dem Anstieg der Wassertemperatur in dem Wassererhitzer (100) entspricht, mit einer folgenden Gleichung erworben wird,

$$W_1 = 7 \times V \times \frac{T_{endgültig} - T_{anfänglich}}{6000},$$

wobei $T_{endgültig}$ die endgültige Intra-Liner-Temperatur des Wassererhitzers (100) ist, $T_{anfänglich}$ die anfängliche Intra-Liner-Temperatur des Wassererhitzers (100) ist und $V$ ein Wasservolumen des Wassererhitzers (100) ist.

**12.** Verfahren nach Anspruch 10, wobei der historische Stromverbrauch des Wassers, der mit $W_2$ bezeichnet wird, mit der folgenden Gleichung berechnet wird,

$$W_2 = KW - W_1,$$

wobei $W$ der historische Gesamtstromverbrauch des Wassererhitzers (100) ist, K ein Verlustkoeffizient ist und $W_1$ der historische Stromverbrauch für das Erhitzen von Wasser in dem Tank des Wassererhitzers (100) ist, der dem Anstieg der Wassertemperatur in dem Wassererhitzer (100) entspricht.

13. Verfahren nach Anspruch 1, wobei nach dem Bestimmen (S40) der Einstelltemperatur des Wassererhitzers (100) basierend auf dem vorhergesagten Gesamtstromverbrauch, das Verfahren ferner Folgendes umfasst:

Durchführen einer Extremwertkorrektur der Einstelltemperatur des Wassererhitzers (100);
wobei die Extremwertkorrektur der Einstelltemperatur des Wassererhitzers (100) basierend auf einer folgenden Gleichung durchgeführt wird,

$$T_{endgültig} = \max\left(T_{out}, \min\left(T, T_{max}\right)\right),$$

wobei $T_{max}$ die maximale Temperatur ist, die für den Wassererhitzer (100) eingestellt werden darf, $T_{out}$ die Auslasswassertemperatur des Wassererhitzers (100) ist, $T$ die Einstelltemperatur des Wassererhitzers (100) ist, und $T_{final}$ die Einstelltemperatur des Wassererhitzers (100) nach der Extremwertkorrektur ist.

14. Wassererhitzer (100), umfassend einen Tank, **dadurch gekennzeichnet, dass** er einen Speicher (110), einen Prozessor (120) und ein oder mehrere Computerprogramme umfasst, die in dem Speicher (110) gespeichert und so konfiguriert sind, dass sie von dem Prozessor (120) ausgeführt werden können, wobei das eine oder die mehreren Programme Anweisungen umfassen, die von dem Prozessor (120) auszuführen sind, um Vorgänge des Verfahrens nach einem der Ansprüche 1-13 auszuführen.

15. Nichtflüchtiges computerlesbares Speichermedium (200), **dadurch gekennzeichnet, dass** es ein oder mehrere Computerprogramme (201) speichert, die Anweisungen umfassen, die dazu konfiguriert sind, von einem Prozessor (120) ausgeführt zu werden, um Vorgänge des Verfahrens nach einem der Ansprüche 1-13 durchzuführen.


**Revendications**

1. Procédé de réglage de la température d'un chauffe-eau (100), le procédé étant **caractérisé en ce qu'**il comprend :

l'acquisition (S10) des caractéristiques historiques de consommation d'énergie du chauffe-eau (100) ;
l'entrée (S20) des caractéristiques historiques de consommation d'énergie du chauffe-eau (100) dans un modèle de prédiction de consommation d'énergie prédéfini, et l'acquisition (S20) de la consommation d'énergie prédite du chauffage de l'eau d'un utilisateur délivrée en sortie par le modèle de prédiction de consommation d'énergie ;
la détermination (S30) de la consommation d'énergie totale prédite du chauffe-eau (100) sur la base de la consommation d'énergie prédite,
le procédé étant **caractérisé en ce qu'**il comprend :

la détermination (S40) de la température de réglage du chauffe-eau (100) sur la base de la consommation d'énergie totale prédite ; et
le réglage (S50) de la température de chauffage du chauffe-eau (100) sur la base de la température de réglage.

2. Procédé selon la revendication 1, dans lequel la détermination (S40) de la température de réglage du chauffe-eau (100) sur la base de la consommation d'énergie totale prédite comprend :

l'acquisition (S41) de la température actuelle de l'eau du chauffe-eau (100) ; et
la détermination (S42) de la température de réglage du chauffe-eau (100) sur la base de la température actuelle de l'eau et de la consommation d'énergie totale prédite.

3. Procédé selon la revendication 2, dans lequel la détermination (S42) de la température de réglage du chauffe-eau (100) sur la base de la température actuelle de l'eau et de la consommation d'énergie totale prédite comprend :

la détermination de la température de réglage du chauffe-eau (100) avec l'équation suivante,

$$T = \frac{3600y}{4,2V} + T_{actu}$$

où $T$ est la température de réglage du chauffe-eau (100), $y$ est la consommation d'énergie totale prédite, $T_{actu}$ est la température actuelle de l'eau et $V$ est un volume d'eau du chauffe-eau (100).

4. Procédé selon la revendication 1, dans lequel l'entrée (S20) des caractéristiques historiques de consommation d'énergie du chauffe-eau (100) dans le modèle de prédiction de consommation d'énergie prédéfini, et l'acquisition (S20) de la consommation d'énergie prédite de chauffage de l'eau de l'utilisateur délivrée en sortie par le modèle de prédiction de consommation d'énergie comprennent :

l'acquisition des données de température et des données sur les vacances ; et
l'entrée des caractéristiques historiques de consommation d'énergie du chauffe-eau (100), des données de température et des données de vacances dans le modèle de prédiction de consommation d'énergie, et l'acquisition de la valeur prédite de la consommation d'énergie du chauffage de l'eau de l'utilisateur délivrée en sortie par le modèle de prédiction de consommation d'énergie.

5. Procédé selon la revendication 1, dans lequel l'entrée (S20) des caractéristiques historiques de consommation d'énergie du chauffe-eau (100) dans le modèle de prédiction de consommation d'énergie prédéfini, et l'acquisition (S20) de la consommation d'énergie prédite du chauffage de l'eau de l'utilisateur délivrée en sortie par le modèle de prédiction de consommation d'énergie comprennent :

l'acquisition (S21) d'événements d'entraînement concernant l'eau ;
la construction (S22) du modèle de prédiction de consommation d'énergie sur la base des événements d'entraînement concernant l'eau et d'algorithmes d'apprentissage automatique ; et
l'entrée (S23) des caractéristiques historiques de consommation d'énergie du chauffe-eau (100) dans le modèle de prédiction de consommation d'énergie, et l'acquisition (S23) de la consommation d'énergie prédite du chauffage de l'eau de l'utilisateur.

6. Procédé selon la revendication 5, dans lequel le modèle de prédiction de consommation d'énergie est établi sur la base d'une équation de régression linéaire ;
lors d'un processus d'entraînement du modèle de prédiction de consommation d'énergie, une fonction de perte du modèle de prédiction de consommation d'énergie comprend un premier terme de régularisation et un second terme de régularisation, le premier terme de régularisation est une somme de valeurs absolues de coefficients de l'équation de régression linéaire, et le second terme de régularisation est une somme de carrés des coefficients de l'équation de régression linéaire.

7. Procédé selon la revendication 6, dans lequel le modèle de prédiction de consommation d'énergie est exprimé comme

$$\hat{y}_i = \sum_{i=1}^{m} a_i X_i,$$

dans lequel la fonction de perte est

$$E = \sum_{i=1}^{n} \left\{ \frac{(1-\lambda)(y_i - \hat{y}_i)^2 + \lambda(y_i - \hat{y}_i)}{|y_i - \hat{y}_i|} + \alpha \sum_{j=1}^{m} |a_j| + \beta \sum_{j=1}^{m} a_j^2 \right\},$$

où $X_i$ est une $i$-ième caractéristique historique de consommation d'énergie, $y_i$ est la consommation d'énergie réelle du chauffage de l'eau de l'utilisateur correspondant à un $i$-ième événement d'entraînement concernant l'eau, $\hat{y}_i$ est une $i$-ième valeur prédite de la consommation d'énergie du chauffage de l'eau de l'utilisateur délivrée en sortie par le modèle de prédiction de consommation d'énergie, $\alpha$, $\beta$ et $\lambda$ sont des hyperparamètres, où $\alpha$, $\beta$, $\lambda > 0$ et $\lambda \in (0,1)$, n est un nombre total d'événements d'entraînement concernant l'eau, $a_j$ est un $j$-ième coefficient de l'équation de régression linéaire, et m fait référence au fait qu'il y a m coefficients dans l'équation de régression linéaire.

8.  Procédé selon la revendication 1, dans lequel la détermination (S30) de la consommation d'énergie totale prédite du chauffe-eau (100) sur la base de la consommation d'énergie prédite comprend :

    le calcul (S31) et l'obtention (S31) de la consommation d'énergie du chauffage de l'eau dans un réservoir du chauffe-eau (100) correspondant à une augmentation de la température de l'eau dans le chauffe-eau (100) ; et
    la détermination (S32) de la consommation d'énergie totale prédite du chauffe-eau (100) en additionnant la consommation d'énergie prédite de l'eau et la consommation d'énergie du chauffage de l'eau dans le réservoir.

9.  Procédé selon la revendication 1, dans lequel l'acquisition (S10) des caractéristiques historiques de consommation d'énergie du chauffe-eau (100) comprend :

    l'acquisition (S11) de l'historique de consommation d'énergie du chauffage de l'eau de l'utilisateur ; et
    la détermination (S12) des caractéristiques historiques de consommation d'énergie sur la base de l'historique de consommation d'énergie pour le chauffage de l'eau de l'utilisateur.

10. Procédé selon la revendication 9, dans lequel l'acquisition (S11) de l'historique de consommation d'eau de l'utilisateur comprend :

    l'acquisition (S111) de l'historique de consommation d'énergie du chauffage de l'eau dans un réservoir du chauffe-eau (100) correspondant à une augmentation de la température de l'eau dans le chauffe-eau (100) ; et
    le calcul (S112) et l'obtention (S112) de l'historique de consommation d'eau sur la base de l'historique de consommation d'énergie du chauffage de l'eau dans le réservoir du chauffe-eau (100) et de l'historique de consommation d'énergie totale du chauffe-eau (100).

11. Procédé selon la revendication 10, dans lequel l'acquisition (S111) de l'historique de consommation d'énergie du chauffage de l'eau dans le réservoir du chauffe-eau (100) correspondant à l'augmentation de la température de l'eau dans le chauffe-eau (100) comprend :

    la détermination de l'historique de consommation d'énergie du chauffage de l'eau dans le réservoir du chauffe-eau (100) correspondant à l'augmentation de la température de l'eau dans le chauffe-eau (100) sur la base de la température interne initiale et de la température interne finale du chauffe-eau (100) ;
    dans lequel l'historique de consommation d'énergie $W_1$ du chauffage de l'eau dans le réservoir du chauffe-eau (100) correspondant à l'augmentation de la température de l'eau dans le chauffe-eau (100) est acquis avec une équation suivante,

$$\mathbf{W_1} = 7 \times \mathbf{V} \times \frac{T_{finale} - T_{initiale}}{6000} ,$$

    où $T_{finale}$ est la température interne finale du chauffe-eau (100), $T_{initiale}$ est la température interne initiale du chauffe-eau (100), et V est un volume d'eau du chauffe-eau (100).

12. Procédé selon la revendication 10, dans lequel l'historique de consommation d'eau, qui est désigné par $W_2$, est calculé avec l'équation suivante,

$$W_2 = KW - W_1 ,$$

    où W est l'historique de consommation d'énergie totale du chauffe-eau (100), K est un coefficient de perte et $W_1$ est l'historique de consommation d'énergie du chauffage de l'eau dans le réservoir du chauffe-eau (100) correspondant à l'augmentation de la température de l'eau dans le chauffe-eau (100) .

13. Procédé selon la revendication 1, dans lequel après la détermination (S40) de la température de réglage du chauffe-eau (100) sur la base de la consommation d'énergie totale prédite, le procédé comprenant également :

la réalisation d'une correction d'extremum sur la température de réglage du chauffe-eau (100) ;
dans lequel la correction d'extremum sur la température de réglage du chauffe-eau (100) est réalisée sur la base d'une équation suivante,

$$T_{finale} = \max\left(T_{sortie}, \min(T, T_{max})\right),$$

où $T_{max}$ est la température maximale qu'il est permis de régler pour le chauffe-eau (100), $T_{sortie}$ est la température de sortie de l'eau du chauffe-eau (100), $T$ est la température de réglage du chauffe-eau (100), et $T_{finale}$ est la température de réglage du chauffe-eau (100) après la correction d'extremum.

14. Chauffe-eau (100) comprenant un réservoir, **caractérisé en ce qu'**il comprend une mémoire (110), un processeur (120) et un ou plusieurs programmes informatiques stockés dans la mémoire (110) et configurés pour être exécutés par le processeur (120), les un ou plusieurs programmes comprenant des instructions à exécuter par le processeur (120) pour réaliser les opérations du procédé selon l'une quelconque des revendications 1 à 13.

15. Support de stockage (200) lisible par ordinateur non transitoire, **caractérisé par** le stockage d'un ou plusieurs programmes informatiques (201) comprenant des instructions configurées pour être exécutées par un processeur (120) pour réaliser les opérations du procédé selon l'une quelconque des revendications 1 à 13.

FIG. 1

S11

Historical power consumption of water of a user is acquired.

S12

The historical power consumption characteristics is determined based on the historical power consumption of water.

FIG. 2

S111

Historical power consumption of water in a tank of the water heater corresponding to a rise of water temperature in the water heater is acquired.

S112

The historical power consumption of water is calculated and obtained based on the historical power consumption of water in the tank of the water heater and historical total power consumption of the water heater.

FIG. 3

Training water events are acquired.

S21

The power-consumption prediction model is constructed based on the training water events and machine learning algorithms.

S22

The historical power consumption characteristics of the water heater are input to the power-consumption prediction model, and the predicted power consumption of the water of the user is acquired.

S23

FIG. 4

Power consumption of water in a tank of the water heater corresponding to a rise of water temperature in the water heater is calculated and obtained.

S31

The predicted total power consumption of the water heater is determined by summarizing the predicted power consumption of the water and the power consumption of water in the tank.

S32

FIG. 5

S41

Current water temperature of the water heater is acquired.

S42

The setting temperature of the water heater is determined based on the current water temperature and the predicted total power consumption.

FIG. 6

120

100

110

processor

Memory

FIG. 7

200

201

Computer program

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012105642 A1
- EP 3101366 A2
- CN 112446169 A
- US 2011270452 A1
- CN 110567163 B